# EUROPEAN PATENT SPECIFICATION

(11) **EP 3 618 415 B1**
(45) Date of publication and mention of the grant of the patent: **30.04.2025**
(21) Application number: 18790106.1
(22) Date of filing: 01.02.2018
(51) Int. Cl.: B60S 1/60, G02B 7/02, G03B 15/00, G03B 17/08, G03B 17/56, G02B 27/00, B60S 1/56, H04N 23/52, H04N 23/55

(54) **CLEANING DEVICE AND IMAGE CAPTURING UNIT EQUIPPED WITH CLEANING DEVICE**
REINIGUNGSVORRICHTUNG UND MIT REINIGUNGSVORRICHTUNG AUSGESTATTETE BILDERFASSUNGSEINHEIT
DISPOSITIF DE NETTOYAGE ET UNITÉ DE CAPTURE D'IMAGES MUNIE D'UN DISPOSITIF DE NETTOYAGE

(30) Priority: 24.04.2017 JP 2017085290
(43) Date of publication of application: 04.03.2020
(73) Proprietor: Murata Manufacturing Co., Ltd., Nagaokakyo-shi, Kyoto 617-8555 (JP)
(72) Inventor: ICHIGUCHI, Shinichiro, Nagaokakyo-shi Kyoto 617-8555 (JP); FUJIMOTO, Katsumi, Nagaokakyo-shi Kyoto 617-8555 (JP); HORIGUCHI, Chikahiro, Nagaokakyo-shi Kyoto 617-8555 (JP); NISHIYAMA, Kenji, Nagaokakyo-shi Kyoto 617-8555 (JP); KURATANI, Yasuhiro, Nagaokakyo-shi Kyoto 617-8555 (JP)
(74) Representative: Zimmermann, Tankred Klaus
(86) International application number: PCT/JP2018/003381
(87) International publication number: WO 2018/198464

(56) References cited:
- WO-A2-2010/136220
- DE-A1- 4 217 559
- JP-A- 2011 125 815
- JP-A- 2011 240 910
- JP-A- 2012 138 768
- JP-A- S57 175 342
- US-A1- 2004 047 625
- US-A1- 2012 057 066
- US-A1- 2012 243 093
- US-A1- 2014 299 748
- US-A1- 2015 040 953

## Description

### Technical Field

The present invention relates to a cleaning device and to an imaging unit equipped with the cleaning device.

### Background Art

It is a common practice to mount an imaging unit on the front side or the rear side of a vehicle and to utilize images captured by the imaging unit for navigation. The imaging unit is mounted on the exterior of the vehicle, and extraneous matter, such as rain drops, dirt, dust, or the like, often adheres to a light-transmissive member (i.e., a lens or a cover glass) that covers the imaging unit. In the case of the extraneous matter adhering to the front surface of the imaging unit, the extraneous matter adhered to the imaging unit appears in captured images, which makes the captured images unclear. To address this problem, an imaging unit equipped with a cleaning device that discharges a cleaning liquid to the surface of the light-transmissive member has been developed. In particular, Patent Document 1 discloses an imaging unit equipped with such a cleaning device.

### Citation List

### Patent Document

Patent Document 1: Japanese Unexamined Patent Application Publication No. 2015-057338
Patent Document 2: German Unexamined Patent Application Publication NO. DE 42 17 559 A1

### Summary of Invention

### Technical Problem

The cleaning device according to Patent Document 1 cleans the surface of a light-transmissive member by moving a nozzle that has a cavity for discharging a cleaning liquid. The cleaning device moves the nozzle between a cleaning position near the center of the imaging range and a non-cleaning position away from the center of the imaging range. However, the cleaning device described in Patent Document 1, which employs the nozzle that moves during cleaning, tends to be structurally complicated and to lead to a reliability problem, such as vulnerability to malfunction. In addition, in the cleaning device according to Patent Document 1, failure to move the nozzle to the cleaning position leads to unsatisfactory cleaning results.

Patent Document 2 discloses a cleaning apparatus for an image device. The cleaning apparatus comprises an annular nozzle for discharging a cleaning liquid and an annular piezoceramic element for atomizing the discharged cleaning liquid.

Accordingly, an object of the present invention is to provide a reliable cleaning device for which satisfactory cleaning results can be expected and also to provide an imaging unit equipped with the cleaning device.

### Solution to Problem

A cleaning device according to an aspect of the present invention is set-out in claim 1 and includes a holder section that holds an imaging device, a light-transmissive member disposed in a visual field of the imaging device, a vibrator section that vibrates the light-transmissive member, and a discharge section that discharge a cleaning liquid so as to cause the cleaning liquid to reach a surface of side of the light-transmissive member that is opposite to a side thereof near the imaging device. In the cleaning device, the vibrator section vibrates the light-transmissive member so as to generate a portion of surface of the light-transmissive member that exhibits an amount of displacement larger than that of a portion of surface of the light-transmissive member that the discharged cleaning liquid has reached.

An imaging unit according to another aspect of the present invention is set-out in claim 10 and includes the cleaning device.

### Advantageous Effects of Invention

According to the present invention, the vibrator section vibrates the light-transmissive member so as to generate a portion of surface of the light-transmissive member that exhibits an amount of displacement larger than that of a portion of surface thereof that the discharged cleaning liquid has reached. The cleaning liquid is thereby moved on the surface of the light-transmissive member so as to clean the light-transmissive member. Thus, a reliable cleaning device that can be expected to provide satisfactory cleaning results is obtained.

### Brief Description of Drawings

[Fig. 1] Fig. 1 is a perspective view illustrating a configuration of an imaging unit according to a first embodiment of the present invention.
[Fig. 2] Fig. 2 is a cross-sectional view illustrating the configuration of the imaging unit according to the first embodiment of the present invention.
[Fig. 3] Fig. 3 is a cross-sectional view illustrating the amount of displacement of a protection cover according to the first embodiment of the present invention.
[Fig. 4] Fig. 4 is a perspective view illustrating a configuration of an imaging unit according to a second embodiment of the present invention.
[Fig. 5] Fig. 5 is a cross-sectional view illustrating the configuration of the imaging unit according to the second embodiment of the present invention.
[Fig. 6] Fig. 6 is a perspective view illustrating a configuration of an imaging unit according to a third embodiment of the present invention.
[Fig. 7] Fig. 7 is a perspective view illustrating a configuration of an imaging unit according to a modification example of the third embodiment of the present invention.
[Fig. 8] Fig. 8 is a perspective view illustrating a configuration of an imaging unit according to a fourth embodiment of the present invention.
[Fig. 9] Fig. 9 is a cross-sectional view illustrating a configuration of an imaging unit according to a fifth embodiment of the present invention.
[Fig. 10] Fig. 10 is a cross-sectional view illustrating a configuration of an imaging unit according to a sixth embodiment of the present invention.
[Fig. 11] Fig. 11 is a perspective view illustrating a configuration of an imaging unit in which a hydrophilic region is formed on a light-transmissive member. Description of Embodiments

Now, an imaging unit according to embodiments of the present invention will be described in detail with reference to the drawings. Note that in the drawings, the same reference symbols denote identical or similar elements.

### First Embodiment

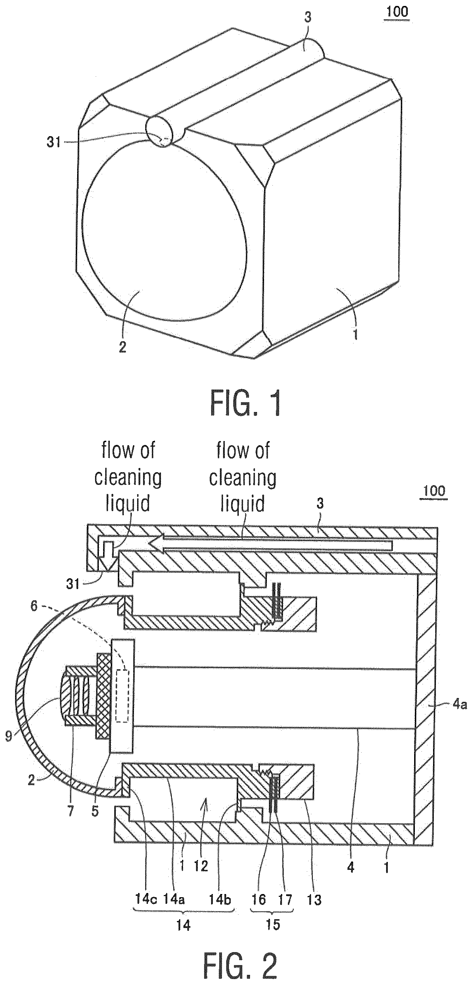

An imaging unit according to a first embodiment of the present invention will be described with reference to the drawings. Fig. 1 is a perspective view illustrating a configuration of an imaging unit 100 according to the first embodiment of the present invention. Fig. 2 is a cross-sectional view illustrating the configuration of the imaging unit 100 according to the first embodiment of the present invention. The imaging unit 100 includes a housing 1, a light-transmissive protection cover 2 disposed on one side of the housing 1, a cleaning nozzle 3 having a cavity 31 for discharging a cleaning liquid to the protection cover 2, a vibrator section 12 that vibrates the protection cover 2, and an imaging section 5 disposed inside the protection cover 2. Note that a portion of the imaging unit 100 excluding the imaging section 5, in other words, a portion of the imaging unit 100 including the housing 1, the protection cover 2, the cleaning nozzle 3, and the vibrator section 12, constitutes a cleaning device that cleans off extraneous matter (deposit) that adheres to the imaging section 5 in the imaging range thereof.

As illustrated in Fig. 2, the imaging section 5 is supported by a cylindrically shaped body member 4 and thereby fixed to a base plate 4a. The base plate 4a is fixed to part of the housing 1. Accordingly, the housing 1 serves as a holder section that holds the imaging section 5 via the body member 4 and base plate 4a. Note that the holder section is not limited to the configuration illustrated in Fig. 2 insofar as the holder section can hold the imaging section 5.

The imaging section 5 contains therein a circuit 6 having an imaging device. A lens module 7 is fixed at a position in the image-shooting direction of the imaging section 5. The lens module 7 is shaped like a cylinder and has multiple lenses 9 disposed therein. Note that the structure of the imaging section 5 is not specifically limited insofar as the imaging section 5 can image an object in front of the lenses 9.

The housing 1 is shaped likes a square tube and is made of, for example, a metal or a synthetic resin. Note that the housing 1 may assume other shapes, such as a cylinder. The base plate 4a is fixed to one end of the housing 1, and the protection cover 2 and the vibrator section 12 are disposed near the other end of the housing 1.

The vibrator section 12 is also shaped like a cylinder. The vibrator section 12 includes a cylindrically shaped first cylindrical member 13, a cylindrically shaped second cylindrical member 14, and a cylindrically shaped piezoelectric vibrator 15. The piezoelectric vibrator 15 has two cylindrically shaped piezoelectric plates 16 and 17. The two piezoelectric plates 16 and 17 are configured such that the polarization direction of one piezoelectric plate is opposite to the polarization direction of the other piezoelectric plate.

Note that in the present invention, the vibrator section and the piezoelectric vibrator may be shaped like a square tube instead of a cylinder. It is preferable to use the vibrator section and the piezoelectric vibrator that are shaped like cylinders, in other words, shaped like rings.

The piezoelectric plates 16 and 17 are made of PZT-based piezoelectric ceramics. Note that other type of ceramics, such as (K, Na)NbO₃, may be used. A single crystal piezoelectric material, such as LiTaO₃, may also be used.

Electrodes (not illustrated) are formed on both sides of each of the piezoelectric plates 16 and 17. Each of the electrodes has a laminated structure of, for example, Ag/NiCu/NiCr.

The cylindrically shaped first cylindrical member 13 is fixed to the bottom surface of the piezoelectric vibrator 15. The first cylindrical member 13 is made of a metal. Duralumin, stainless steel, or kovar may be used as the metal. Alternatively, the first cylindrical member 13 may be made of a semiconductor such as Si having electric conductivity.

The piezoelectric vibrator 15 are sandwiched between part of the first cylindrical member 13 and part of the second cylindrical member 14. Both of the first cylindrical member 13 and the second cylindrical member 14 are made of a metal and have electric conductivity. The piezoelectric vibrator 15 can vibrate longitudinally or transversally by applying an alternating electric field to respective electrodes of the piezoelectric plates 16 and 17. A female thread is formed on part of inner peripheral surface of the second cylindrical member 14. The first cylindrical member 13 is thereby screwed in, and fixed to, the second cylindrical member 14. Part of the first cylindrical member 13 and part of the second cylindrical member 14 are thereby pressed onto the bottom surface and the top surface of the piezoelectric vibrator 15.

Accordingly, the vibration generated by the piezoelectric vibrator 15 vibrates the entire vibrator section 12 efficiently. In the present embodiment, the vibrator section 12 is vibrated efficiently by using the longitudinal effect and the transversal effect.

In addition, the second cylindrical member 14 has a flange portion 14b that protrudes circumferentially outward. The flange portion 14b is disposed in the cavity of the housing 1 and fixed thereto.

A flange portion 14c is also formed at an end of the second cylindrical member 14 so as to protrude circumferentially outward. A portion of the second cylindrical member 14 that continues to both the flange portion 14b and the flange portion 14c is a thin-wall portion 14a. The thickness of the thin-wall portion 14a is thinner than the thickness of the first cylindrical member 13. This causes the cylindrically shaped thin-wall portion 14a to displace largely due to vibration of the vibrator section 12. The thin-wall portion 14a serves to strengthen the vibration, especially, increase its amplitude.

The protection cover 2 is fixed to the flange portion 14c. The protection cover 2 functions as a light-transmissive member that transmits light from an imaging object. The protection cover 2 has an opening that opens in one direction. A portion of the protection cover 2 that defines the opening is joined to the flange portion 14c. The portion is joined by using an adhesive or a soldering material. Alternatively, thermo-compression bonding or anodic bonding may be used.

The protection cover 2 is shaped like a dome that rises from the portion joined to the flange portion 14c. In the present embodiment, the dome is shaped like a hemisphere. Note that the imaging section 5 has a viewing angle of, for example, 170 degrees. However, the dome shape is not specifically limited to a hemisphere. The dome may be formed as a combination of a hemisphere and a cylinder or as a shape having a curved surface shallower than a hemisphere. The entire protection cover 2 has light transmissivity. In the present embodiment, the protection cover 2 is made of glass. However, the protection cover 2 is not specifically limited to glass but may be made of a transparent plastic. Alternatively, the protection cover 2 may be made of transparent ceramics. It may be preferable to use tempered glass for some applications. This increases the strength of the cover. In addition, in the case of glass, a coating layer, such as DLC, may be formed on the surface in order to increase the strength.

The lens module 7 and the imaging section 5 described above are disposed inside the protection cover 2. Images of an external object are captured through the protection cover 2.

The cleaning nozzle 3 is disposed in the housing 1. The cleaning nozzle 3 has the cavity 31 through which a cleaning liquid is discharged to the protection cover 2. The cleaning nozzle 3 is shaped like a tube, and the cleaning liquid is supplied to an end of the tube opposite to the end at which the cavity 31 is formed. The cleaning liquid is discharged from the cavity 31 to an end portion of the protection cover 2. The tip of the cleaning nozzle 3 is positioned outside the imaging range (visual field) of the imaging section 5, and accordingly the cavity 31 is positioned so as not to appear in an image captured by the imaging section 5. In Fig. 2, flow of the cleaning liquid is indicated by arrows. The cleaning nozzle 3 functions as a discharge section for discharging the cleaning liquid. In the present embodiment, the housing 1 is configured to have a single cleaning nozzle 3. However, the housing 1 may be configured to have multiple cleaning nozzles 3.

The following describes operation of the cleaning device disposed on the imaging unit 100 (hereinafter simply called "cleaning device") for cleaning off extraneous matter adhered to the protection cover 2.

In the case of the imaging unit 100 being mounted, for example, on the front side of a vehicle, extraneous matter, such as rain drops, dirt, dust, may adhere to the surface of the protection cover 2. In order to clean the extraneous matter off, the cleaning device discharges a cleaning liquid to the protection cover 2 from the cavity 31 of the cleaning nozzle 3 and causes the vibrator section 12 to vibrate the protection cover 2.

The cleaning device does not simply clean the surface of the protection cover 2 by discharging the cleaning liquid from the cavity 31 of the cleaning nozzle 3. The cleaning device cleans the surface of the protection cover 2 by vibrating the protection cover 2 and thereby moving the cleaning liquid discharged thereon along the surface of the protection cover 2. Accordingly, the cleaning device does not only clean an area onto which the cleaning liquid is discharged but also clean liquid tracks on which the cleaning liquid moves. Moreover, the cleaning device vibrates the protection cover 2, which readily takes off the extraneous matter adhered to the surface of the protection cover 2.

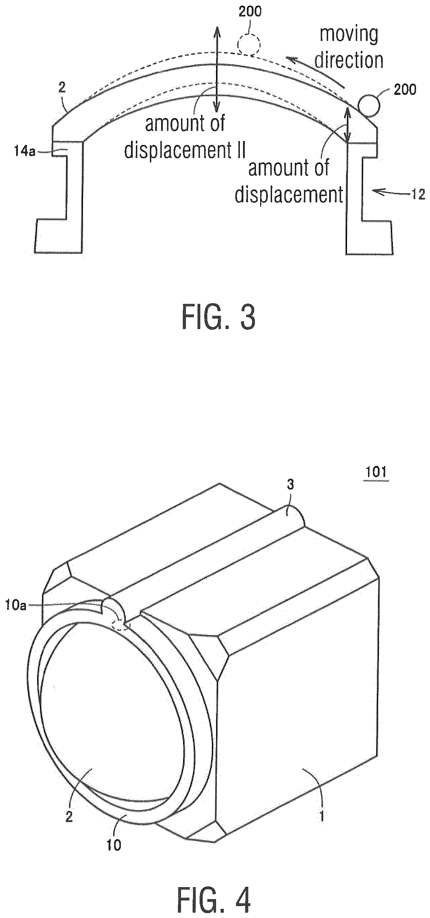

Vibrating the protection cover 2 moves the cleaning liquid discharged onto the surface of the protection cover 2 because the amount of displacement of the protection cover 2 becomes different between positions on the surface of the protection cover 2. In other words, the vibrator section 12 vibrates the protection cover 2 so as to generate a portion of surface of the protection cover 2 that exhibits an amount of displacement larger than that of a portion of surface of the protection cover 2 that the discharged cleaning liquid has reached. Fig. 3 is a cross-sectional view illustrating the amount of displacement of the protection cover according to the first embodiment of the present invention. As indicated by the dotted lines in Fig. 3, when the protection cover 2 is vibrated, an amount of displacement II, which is the displacement of center portion of the protection cover 2, becomes larger than an amount of displacement I, which is the displacement of end portion of the protection cover 2 that is joined to the flange portion 14c.

When the amount of displacement becomes different between the end portion of the protection cover 2 and the center portion of the protection cover 2, a cleaning liquid 200 that has been discharged to the edge portion of the protection cover 2 moves toward the center portion of the protection cover 2 that displaces more as illustrated in Fig. 3. The imaging unit 100 moves the cleaning liquid 200 toward the center portion of the protection cover 2, which can clean the surface of the protection cover 2 along liquid tracks on which the cleaning liquid 200 moves and remove the extraneous matter adhered thereto. The cleaning liquid 200 that has reached the center portion of the protection cover 2 is atomized at the center portion that is subjected to a larger displacement. The cleaning liquid 200 disappears together with the extraneous matter that has been present on the surface of the protection cover 2.

Fig. 3 illustrates an example of a vibration mode of the protection cover 2 in which the end portion of the protection cover 2 exhibits a small amount of displacement and the center portion thereof exhibits a large amount of displacement. However, the vibration mode is not limited to this example. It is sufficient that the vibration mode of the protection cover 2 at least causes the amount of displacement to vary at different positions on the surface of the protection cover 2.

Note that by changing the vibration mode of the protection cover 2, the vibrator section 12 can vibrate the protection cover 2 in such a manner that the protection cover 2 exhibits a maximum amount of displacement at a position other than the center of the protection cover 2. In addition, depending on the conditions, such as the weight and size of the cleaning liquid, the vibrator section 12 can move and atomize the cleaning liquid by vibrating the protection cover 2 so as to cause the amount of displacement to be 1 **µ**m or more at a position on the surface of the protection cover 2 at which the protection cover 2 exhibits the maximum amount of displacement.

Note that the vibrator section 12 can vibrate the protection cover 2 in a respiratory vibration mode and in a longitudinal vibration mode by applying an alternating electric field to the piezoelectric vibrator 15. Moreover, modifying the structure of the vibrator section 12 or controlling the electric field applied to the piezoelectric vibrator 15 enables the vibrator section 12 to vibrate the protection cover 2 in various other vibration modes.

As illustrated in Fig. 1, the cleaning nozzle 3 is disposed on the top side of the housing 1 and discharges the cleaning liquid to an upper end of the protection cover 2. The cleaning liquid discharged onto the upper end of the protection cover 2 flows along the edge of the protection cover 2 and reaches a lower end thereof. When the vibrator section 12 vibrates the protection cover 2, the cleaning liquid having reached the edge of the protection cover 2 also moves toward the center portion thereof, which enables the cleaning device to clean the entire surface of the protection cover 2. Here, "a portion of surface of the protection cover 2 that the discharged cleaning liquid reaches" refers to a portion of surface of the protection cover 2 that the cleaning liquid discharged from the cavity 31 of the cleaning nozzle 3 directly reaches. In addition, it also refers to a portion of surface of the protection cover 2 that the cleaning liquid indirectly reaches. This also includes a case in which the cleaning liquid discharged from the cleaning nozzle 3 reaches the housing 1 first, instead of reaching the surface of the protection cover 2 directly, and subsequently moves to the surface of the protection cover 2.

As described, the imaging unit 100 according to the first embodiment includes the cleaning device. The cleaning device includes the housing 1 that holds the imaging section 5, the protection cover 2 disposed in the visual field of the imaging section 5, the vibrator section 12 that vibrates the protection cover 2, and the cleaning nozzle 3 that discharges the cleaning liquid so as to allow the cleaning liquid to reach a surface of side of the protection cover 2 that is opposite to the side near the imaging section 5. The vibrator section 12 vibrates the protection cover 2 so as to generate a portion of surface of the protection cover 2 that exhibits an amount of displacement larger than that of the portion of surface thereof that the discharged cleaning liquid has reached.

In the imaging unit 100, the cleaning device can move the cleaning liquid discharged onto the protection cover 2 to a position where the displacement is large, thereby cleaning the surface of the protection cover 2 along the liquid tracks on which the cleaning liquid moves and atomizing the cleaning liquid at a position at which a maximum displacement is exhibited. In addition, the cleaning device causes the vibrator section 12 to vibrate the protection cover 2, which readily takes off dirt adhered to the surface of the protection cover 2. The cleaning efficiency of the cleaning device is thereby improved, which can reduce the amount of the cleaning liquid to be used and also can reduce the size of a tank for the cleaning liquid. Moreover, the cleaning device can move the cleaning liquid discharged on the surface of the protection cover 2, which eliminates the necessity of employing a movable cleaning nozzle 3 that moves so as to discharge the cleaning liquid to desired positions. This improves the reliability of the cleaning device.

In addition, the cleaning nozzle 3 has the cavity 31 for discharging the cleaning liquid disposed at a position out of the imaging range (visual field) of the imaging section 5. Accordingly, the cavity 31 does not hamper the imaging section 5 from capturing images.

### Second Embodiment

In the imaging unit 100 according to the first embodiment, the cleaning liquid discharged onto an upper end of the protection cover 2 is allowed to flow along the edge of the protection cover 2 to reach the lower end thereof. On the other hand, an imaging unit according to the present embodiment is configured to have a guide portion provided along the periphery of the protection cover, which helps cleaning liquid discharged from the cleaning nozzle to reach the lower end of the protection cover.

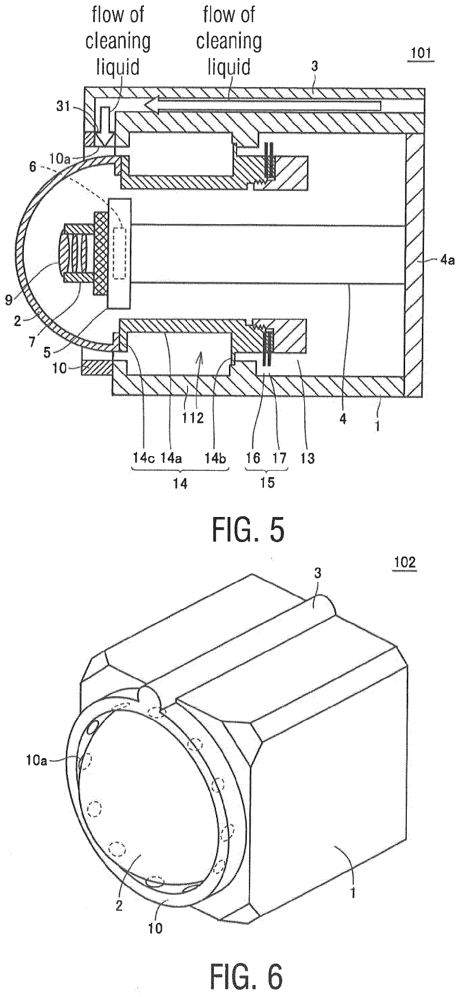

Fig. 4 is a perspective view illustrating a configuration of an imaging unit 101 according to the second embodiment of the present invention. Fig. 5 is a cross-sectional view illustrating the configuration of the imaging unit 101 according to the second embodiment of the present invention. Note that in the imaging unit 101 illustrated in Figs. 4 and 5, elements similar to those of the imaging unit 100 illustrated in Figs. 1 and 2 are denoted by the same reference symbols, and detailed descriptions thereof will be omitted.

The imaging unit 101 includes a guide portion 10 along the periphery of the protection cover 2. The guide portion 10 is an annularly shaped component and is fixed to the housing 1. The height (i.e., the width in the image-shooting direction) of the guide portion 10 is such that the guide portion 10 does not appear in the imaging range of the imaging section 5. The cavity 10a is formed in the inner circumferential surface of the guide portion 10. The cavity 10a is connected to the cavity 31 of the cleaning nozzle 3 and discharges cleaning liquid supplied from the cleaning nozzle 3.

The cleaning liquid discharged from the cavity 10a flows along the inner circumferential surface of the guide portion 10 and reaches the lower end of the protection cover 2. In the cleaning device, when the vibrator section 12 vibrates the protection cover 2, the cleaning liquid having reached the inner circumferential surface of the guide portion 10 moves toward the center of the protection cover 2, which can clean the entire surface of the protection cover 2.

As described, in the imaging unit 101 according to the second embodiment, the protection cover 2 has the guide portion 10 provided along the periphery thereof, and the guide portion 10 has the cavity 10a formed therein. Thus, the cleaning device enables the cleaning liquid discharged from the cavity 10a to flow reliably to the lower end of the protection cover 2 along the inner circumferential surface of the guide portion 10, and thereby the cleaning device can clean the entire surface of the protection cover 2.

### Third Embodiment

The imaging unit 101 according to the second embodiment includes a single cavity 10a formed in the guide portion 10. On the other hand, an imaging unit according to the present embodiment is configured to have multiple cavities formed in the guide portion.

Fig. 6 is a perspective view illustrating a configuration of an imaging unit 102 according to the third embodiment of the present invention. Note that in the imaging unit 102 illustrated in Fig. 6, elements similar to those of the imaging unit 100 illustrated in Fig. 1 and of imaging unit 101 illustrated in Fig. 4 are denoted by the same reference symbols, and detailed descriptions thereof will be omitted.

The imaging unit 102 includes the guide portion 10 along the periphery of the protection cover 2. The guide portion 10 is an annularly shaped component that is fixed to the housing 1 and is connected to the cleaning nozzle 3. The tube-like guide portion 10 enables the cleaning liquid to flow therethrough. The multiple cavities 10a are formed in the inner circumferential surface of the guide portion 10. The cleaning liquid is supplied to the cavities 10a from the cleaning nozzle 3 through the guide portion 10. Accordingly, the cleaning device can discharge the cleaning liquid from the multiple cavities 10a formed in the guide portion 10 simply by supplying the cleaning liquid from the cleaning nozzle 3.

As illustrated in Fig. 6, the cavities 10a are arranged equidistantly with each other around the protection cover 2. In addition, the cavities 10a are also arranged in such a manner that one cavity 10a and corresponding another cavity 10a oppose each other with respect to the center of the protection cover 2. In other words, a cavity 10a disposed at the upper end of the protection cover 2 opposes a cavity 10a disposed at the lower end of the protection cover 2 with respect to the center of the protection cover 2. Thus, the cleaning device can discharge the cleaning liquid uniformly to the edge of the protection cover 2.

The cleaning liquid is discharged uniformly to the edge of the protection cover 2 from multiple cavities 10a. Thus, in the cleaning device, when the vibrator section 12 vibrates the protection cover 2, the cleaning liquid discharged uniformly to the edge of the guide portion 10 moves toward the center of the protection cover 2, which can clean the entire surface of the protection cover 2.

As described above, in the imaging unit 102 according to the third embodiment, the multiple cavities 10a are formed in the inner circumferential surface of the guide portion 10 and are arranged equidistantly with each other around the protection cover 2, which enables the cleaning liquid discharged uniformly to the edge of the protection cover 2 to clean the entire surface of the protection cover 2.

Moreover in the imaging unit 102 according to the third embodiment, the multiple cavities 10a are formed in the inner circumferential surface of the guide portion 10 and are arranged in such a manner that one cavity 10a opposes corresponding another cavity 10a with respect to the center of the protection cover 2. This enables the cleaning liquid uniformly discharged to the edge of the protection cover 2 to clean the entire surface of the protection cover 2.

### Modification Example

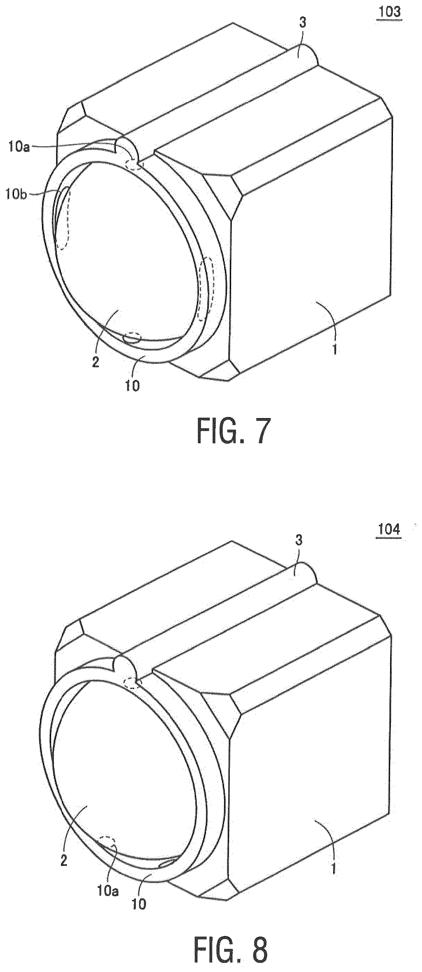

The cavities 10a illustrated in Fig. 6 have openings that are shaped equally. However, the shape of the opening may be changed depending on the position of the cavity 10a disposed in the guide portion 10. Fig. 7 is a perspective view illustrating a configuration of an imaging unit 103 according to a modification example of the third embodiment of the present invention. Note that in the imaging unit 103 illustrated in Fig. 7, elements similar to those of the imaging unit 100 illustrated in Fig. 1 and of the imaging unit 101 illustrated in Fig. 4 are denoted by the same reference symbols, and detailed descriptions thereof will be omitted.

The imaging unit 103 includes a guide portion 10 along the periphery of the protection cover 2. The guide portion 10 is an annularly shaped component that is fixed to the housing 1 and is connected to the cleaning nozzle 3. The tube-like guide portion 10 enables the cleaning liquid to flow therethrough. Cavities 10a having circularly shaped openings and cavities 10b having elongated openings are formed in the inner circumferential surface of the guide portion 10. Moreover, as illustrated in Fig. 7, the cavities 10a and the cavities 10b are arranged equidistantly along the periphery of the protection cover 2. A cavity 10a disposed at the upper end of the protection cover 2 opposes a cavity 10a disposed at the lower end thereof with respect to the center of the protection cover 2, whereas a cavity 10b disposed at the right end of the protection cover 2 opposes a cavity 10b disposed at the left end thereof with respect to the center of the protection cover 2.

As described above, the imaging unit 103 according to the modification example includes multiple cavities formed in the inner circumferential surface of the guide portion 10, and the multiple cavities further include the cavities 10a and 10b that have openings shaped differently. Accordingly, in view of the position at which the imaging unit 103 is mounted, the amount of cleaning liquid discharged from each cavity can be changed depending on the position of the cavity in the guide portion 10. As illustrated in Fig. 7, for example, the amount of the cleaning liquid discharged to the upper and lower ends of the protection cover 2 is decreased, whereas the amount of the cleaning liquid discharged to the right and left ends of the protection cover 2 is increased.

### Fourth Embodiment

In the imaging unit 102 according to the third embodiment, the cavities 10a are arranged equidistantly along the periphery of the protection cover 2. In an imaging unit according to the present embodiment, multiple cavities are formed in the guide portion so as to have different spacings between adjacent cavities.

Fig. 8 is a perspective view illustrating a configuration of an imaging unit 104 according to the fourth embodiment of the present invention. Note that in the imaging unit 104 illustrated in Fig. 8, elements similar to those of the imaging unit 100 illustrated in Fig. 1 and of the imaging unit 101 illustrated in Fig. 4 are denoted by the same reference symbols, and detailed descriptions thereof will be omitted.

The imaging unit 104 includes the guide portion 10 along the periphery of the protection cover 2. The guide portion 10 is an annularly shaped component that is fixed to the housing 1 and is connected to the cleaning nozzle 3. The tube-like guide portion 10 enables the cleaning liquid to flow therethrough. Multiple cavities 10a are formed in the inner circumferential surface of the guide portion 10. A cleaning liquid is supplied to the cavities 10a from the cleaning nozzle 3 through the guide portion 10. Accordingly, the cleaning device can discharge the cleaning liquid from the multiple cavities 10a formed in the guide portion 10 simply by supplying the cleaning liquid from the cleaning nozzle 3.

As illustrated in Fig. 8, the cavities 10a are arranged along the periphery of the protection cover 2 so as to have different spacings between adjacent cavities. In other words, the distance between a cavity 10a disposed at the upper end of the protection cover 2 and one of two cavities 10a disposed at the lower end thereof is different from the distance between the two cavities 10a disposed at the lower end.

As described above, in the imaging unit 104 according to the fourth embodiment, multiple cavities 10a are formed in the inner circumferential surface of the guide portion 10 and are arranged around the protection cover 2 so as to have different spacings between adjacent cavities 10a. Accordingly, in view of the position at which the imaging unit 104 is mounted, the amount of cleaning liquid discharged from each cavity can be changed depending on the position of the cavity in the guide portion 10. As illustrated in Fig. 8, for example, the amount of the cleaning liquid discharged to the upper end of the protection cover 2 is decreased, whereas the amount of the cleaning liquid discharged to the lower end of the protection cover 2 is increased.

### Fifth Embodiment

A relation between the optical axis of the imaging section 5 and the amount of displacement of the protection cover will be described in relation to an imaging unit according to the present embodiment.

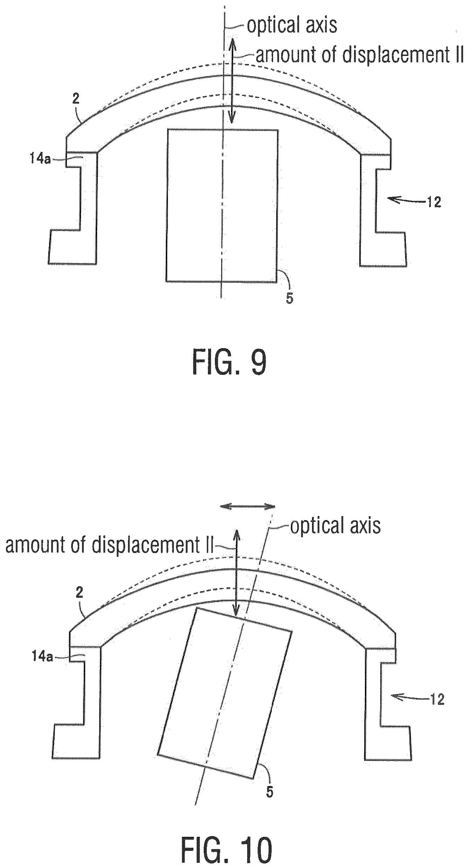

Fig. 9 is a cross-sectional view illustrating a configuration of an imaging unit according to the fifth embodiment of the present invention. Note that Fig. 9 only illustrates part of the protection cover 2, part of the imaging section 5, and part of the vibrator section 12 of the imaging unit for the convenience of explanation. Note that in the imaging unit illustrated in Fig. 9, elements similar to those of the imaging unit 100 illustrated in Fig. 2 are denoted by the same reference symbols, and detailed descriptions thereof will be omitted.

In the imaging unit illustrated in Fig. 9, the housing holds the imaging section 5 in such a manner that the optical axis of the imaging section 5 passes through the center portion of the protection cover 2 that exhibits the amount of displacement II, which is a maximum displacement exhibited on the surface of the protection cover 2. Accordingly, the cleaning liquid discharged onto the protection cover 2 is gathered and then atomized at the center portion of the protection cover 2 that exhibits the amount of displacement II. In other words, the cleaning liquid are gathered and atomized at the center of imaging range of the imaging section 5 in the imaging unit illustrated in Fig. 9.

As described above, in the imaging unit according to the fifth embodiment, the housing holds the imaging section 5 in such a manner that the optical axis of the imaging section 5 passes through the portion of surface of the protection cover 2 that exhibits a maximum amount of displacement (the amount of displacement II). Thus, the center of imaging range of the imaging section 5 can be cleaned reliably, and the imaging unit can capture images through the clean and clear protection cover 2.

### Sixth Embodiment

The imaging unit according to the sixth embodiment is configured such that the optical axis of the imaging section 5 passes through the portion of surface of the protection cover 2 that exhibits the maximum amount of displacement. In the imaging unit according to the present embodiment, the optical axis of the imaging section 5 passes through the portion of surface of the protection cover that does not exhibit a maximum amount of displacement.

Fig. 10 is a cross-sectional view illustrating a configuration of an imaging unit according to the sixth embodiment of the present invention. Note that Fig. 10 only illustrates part of the protection cover 2, part of the imaging section 5, and part of the vibrator section 12 of the imaging unit for the convenience of explanation. Note that in the imaging unit illustrated in Fig. 10, elements similar to those of the imaging unit 100 illustrated in Fig. 2 are denoted by the same reference symbols, and detailed descriptions thereof will be omitted.

In the imaging unit illustrated in Fig. 10, the housing holds the imaging section 5 in such a manner that the optical axis of the imaging section 5 passes through the center portion of the protection cover 2 that does not exhibit the amount of displacement II. Accordingly, the cleaning liquid discharged onto the protection cover 2 is gathered and then atomized at a portion of the protection cover 2 that is different from the center of imaging range of the imaging section 5.

As described above, in the imaging unit according to the sixth embodiment, the housing holds the imaging section 5 in such a manner that the optical axis of the imaging section 5 passes through the portion of surface of the protection cover 2 that does not exhibit a maximum amount of displacement (the amount of displacement II). Thus, the imaging unit can capture images without being disturbed by a collected cleaning liquid or an atomized cleaning liquid even when the cleaning device is cleaning the protection cover 2.

### Other Modification Examples

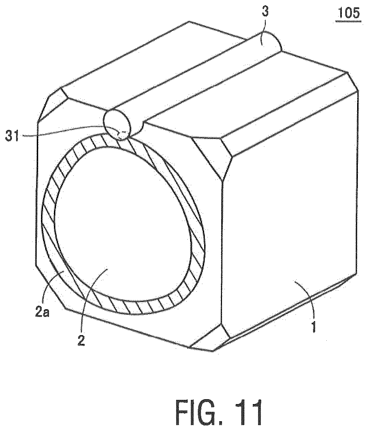

The imaging units according to the above embodiments allow the cleaning liquid discharged onto an upper end of the protection cover 2 to flow along the edge of the protection cover 2 and to reach the lower end thereof. To facilitate the flow, a path for causing the cleaning liquid to move preferentially may be formed by patterning a hydrophilic film on the surface of the protection cover. Fig. 11 is a perspective view illustrating a configuration of an imaging unit in which a hydrophilic region is formed on a light-transmissive member. Note that in an imaging unit 105 illustrated in Fig. 11, elements similar to those of the imaging unit 100 illustrated in Fig. 1 are denoted by the same reference symbols, and detailed descriptions thereof will be omitted.

The imaging unit 105 has a hydrophilic region 2a formed on a peripheral portion of the protection cover 2 by patterning a hydrophilic film thereon. Note that a region on the protection cover 2 other than the hydrophilic region 2a is a hydrophobic region. The cleaning liquid is an aqueous solution so that it can flow on the hydrophilic region 2a preferentially. The cleaning liquid discharged onto the upper end of the protection cover 2 flows along the hydrophilic region 2a and reaches a lower end thereof easily.

In the imaging units according to the above embodiments, the cleaning nozzle 3 is stationary as illustrated in Fig. 1. However, the cavity 31 of the cleaning nozzle 3 may be movable. More specifically, the cleaning nozzle 3 may be configured to move the cavity 31 around the visual field of the protection cover 2. With this configuration, the cleaning liquid can be reliably discharged to positions around the visual field of the protection cover 2.

In the imaging units according to the above embodiments, the protection cover 2 illustrated in Fig. 1 has been described as an example of a light-transmissive member. However, the light-transmissive member may be a lens, a cover glass, or the like, disposed in the imaging section insofar as the light-transmissive member covers the imaging range of the imaging section.

The imaging units according to the above embodiments have been described as having a single cleaning nozzle 3 connected to the guide portion 10 as illustrated in Fig. 6. However, the imaging unit may be configured to include a plurality of cleaning nozzles 3 connected to the guide portion 10.

The imaging units according to the above embodiments are not limited to the imaging units mounted on a vehicle but may be those used in conditions where the light-transmissive member disposed in the visual field of the imaging device needs cleaning.

The embodiments disclosed herein should not be construed as limiting, but construed as merely providing examples. The scope of the present invention is set forth not in the above descriptions but in the following claims.

### Reference Signs List

1 housing
2 protection cover
3 cleaning nozzle
4 body member
4a base plate
5 imaging section
7 lens module
9 lens
10 guide portion
10a, 10b, 31 cavity
12 vibrator section
15 piezoelectric vibrator
100, 101, 102, 103, 104, 105 imaging unit
200 cleaning liquid

## Claims

1. A cleaning device comprising:
a holder section (1) that holds an imaging device (5);
a light-transmissive member (2) disposed in a visual field of the imaging device;
a vibrator section (12) that vibrates the light-transmissive member (2); and
a discharge section (3) that discharge a cleaning liquid so as to cause the cleaning liquid to reach a surface of side of the light-transmissive member (2) that is opposite to a side thereof near the imaging device (5),
wherein the vibrator section (12) vibrates the light-transmissive member (2) so as to generate an amount of displacement at a center portion of the surface of the light-transmissive member (2) which becomes larger than an amount of displacement of said surface on a side of the light-transmissive member (2),
wherein the discharge section includes at least one cavity (10a, 31) for discharging the cleaning liquid at a position out of the visual field, and
wherein the light-transmissive member (2) includes a guide portion (10) for guiding the discharged cleaning liquid provided around the periphery thereof, and the at least one cavity (10a) is formed in the guide portion (10),
**characterized in that**
wherein the discharge section can move the at least one cavity around the visual field of the light-transmissive member.

2. The cleaning device according to Claim 1,
wherein the at least one cavity included in the discharge section has a plurality of cavities.

3. The cleaning device according to Claim 2,
wherein the cavities are arranged in such a manner that one of the cavities and corresponding another one of the cavities oppose each other with respect to a center of the light-transmissive member.

4. The cleaning device according to Claim 2 or 3,
wherein the cavities are arranged equidistantly with each other around the light-transmissive member.

5. The cleaning device according to Claim 2 or 3,
wherein the cavities are arranged so as to have different spacings between adjacent cavities.

6. The cleaning device according to any one of Claims 2 to 5,
wherein the cavities have openings that are shaped differently.

7. The cleaning device according to any one of Claims 1 to 6,
wherein the holder section holds the imaging device in such a manner that an optical axis of the imaging device passes through a portion of surface of the light-transmissive member that exhibits a maximum amount of displacement.

8. The cleaning device according to any one of Claims 1 to 7,
wherein the holder section holds the imaging device in such a manner that an optical axis of the imaging device passes through a portion of surface of the light-transmissive member that does not exhibit a maximum amount of displacement.

9. The cleaning device according to any one of Claims 1 to 8,
wherein a maximum amount of displacement exhibited on the surface of the light-transmissive member is 1 micrometer or more.

10. An imaging unit comprising:
an imaging device; and
the cleaning device according to any one of Claims 1 to 9.

## Patentansprüche

1. Eine Reinigungsvorrichtung, die folgende Merkmale aufweist:
einen Halteabschnitt (1), der eine Bilderzeugungsvorrichtung (5) hält;
ein lichtdurchlässiges Bauglied (2), das in einem Sichtfeld der Bilderzeugungsvorrichtung angeordnet ist;
einen Schwingungselementabschnitt (12), der das lichtdurchlässige Bauglied (2) in Schwingung versetzt; und
einen Abgabeabschnitt (3), der eine Reinigungsflüssigkeit abgibt, um zu bewirken, dass die Reinigungsflüssigkeit eine Oberfläche einer Seite des lichtdurchlässigen Bauglieds (2) erreicht, die einer Seite desselben nahe der Bilderzeugungsvorrichtung (5) gegenüberliegt,
wobei der Schwingungselementabschnitt (12) das lichtdurchlässige Bauglied (2) in Schwingung versetzt, um einen Verschiebungsbetrag an einem Mittelabschnitt der Oberfläche des lichtdurchlässigen Bauglieds (2) zu erzeugen, der größer wird als ein Verschiebungsbetrag der Oberfläche auf einer Seite des lichtdurchlässigen Bauglieds (2),
wobei der Abgabeabschnitt zumindest einen Hohlraum (10a, 31) zum Abgeben der Reinigungsflüssigkeit an einer Position außerhalb des Sichtfelds aufweist, und
wobei das lichtdurchlässige Bauglied (2) einen Führungsabschnitt (10) zum Führen der abgegebenen Reinigungsflüssigkeit aufweist, der um den Umfang desselben vorgesehen ist, und der zumindest eine Hohlraum (10a) in dem Führungsabschnitt (10) ausgebildet ist,
**dadurch gekennzeichnet, dass**
wobei der Abgabeabschnitt den zumindest einen Hohlraum um das Sichtfeld des lichtdurchlässigen Bauglieds bewegen kann.

2. Die Reinigungsvorrichtung gemäß Anspruch 1,
wobei der zumindest eine Hohlraum, der in dem Abgabeabschnitt enthalten ist, eine Mehrzahl von Hohlräumen aufweist.

3. Die Reinigungsvorrichtung gemäß Anspruch 2,
wobei die Hohlräume derart angeordnet sind, dass einer der Hohlräume und ein entsprechender anderer der Hohlräume einander in Bezug auf eine Mitte des lichtdurchlässigen Bauglieds gegenüberliegen.

4. Die Reinigungsvorrichtung gemäß Anspruch 2 oder 3,
wobei die Hohlräume in gleichem Abstand zueinander um das lichtdurchlässige Bauglied herum angeordnet sind.

5. Die Reinigungsvorrichtung gemäß Anspruch 2 oder 3,
wobei die Hohlräume derart angeordnet sind, dass dieselben unterschiedliche Abstände zwischen benachbarten Hohlräumen aufweisen.

6. Die Reinigungsvorrichtung gemäß einem der Ansprüche 2 bis 5,
wobei die Hohlräume Öffnungen aufweisen, die unterschiedlich geformt sind.

7. Die Reinigungsvorrichtung gemäß einem der Ansprüche 1 bis 6,
wobei der Halteabschnitt die Bilderzeugungsvorrichtung auf solche Weise hält, dass eine optische Achse der Bilderzeugungsvorrichtung durch einen Abschnitt der Oberfläche des lichtdurchlässigen Bauglieds verläuft, der einen maximalen Verschiebungsbetrag aufweist.

8. Die Reinigungsvorrichtung gemäß einem der Ansprüche 1 bis 7,
wobei der Halteabschnitt die Bilderzeugungsvorrichtung auf solche Weise hält, dass eine optische Achse der Bilderzeugungsvorrichtung durch einen Abschnitt der Oberfläche des lichtdurchlässigen Bauglieds verläuft, der keinen maximalen Verschiebungsbetrag aufweist.

9. Die Reinigungsvorrichtung gemäß einem der Ansprüche 1 bis 8,
wobei ein maximaler Verschiebungsbetrag, der auf der Oberfläche des lichtdurchlässigen Bauglieds auftritt, 1 Mikrometer oder mehr beträgt.

10. Eine Bilderzeugungseinheit, die folgende Merkmale aufweist:
eine Bilderzeugungsvorrichtung; und
die Reinigungsvorrichtung gemäß einem der Ansprüche 1 bis 9.

## Revendications

1. Dispositif de nettoyage comprenant:
une section de support (1) qui maintient un dispositif d'imagerie (5);
un élément transmettant la lumière (2) disposé dans un champ visuel du dispositif d'imagerie;
une section de vibrateur (12) qui fait vibrer l'élément transmettant la lumière (2); et
une section de délivrance (3) qui délivre un liquide de nettoyage de manière à amener le liquide de nettoyage à atteindre une surface de côté de l'élément transmettant la lumière (2) qui est opposée à un côté de celui-ci proche du dispositif d'imagerie (5),
dans lequel la section de vibrateur (12) fait vibrer l'élément transmettant la lumière (2) de manière à générer une quantité de déplacement au niveau d'une partie centrale de la surface de l'élément transmettant la lumière (2) qui devient plus grande qu'une quantité de déplacement de ladite surface sur un côté de l'élément transmettant la lumière (2),
dans lequel la section de délivrance inclut au moins une cavité (10a, 31) pour délivrer le liquide de nettoyage à une position hors du champ visuel, et
dans lequel l'élément transmettant la lumière (2) inclut une partie de guidage (10) pour guider le liquide de nettoyage délivré prévue autour de sa périphérie, et la au moins une cavité (10a) est formée dans la partie de guidage (10),
**caractérisé en ce que**
dans lequel la section de délivrance peut déplacer la au moins une cavité autour du champ visuel de l'élément transmettant la lumière.

2. Dispositif de nettoyage selon la revendication 1,
dans lequel la au moins une cavité incluse dans la section de délivrance a une pluralité de cavités.

3. Dispositif de nettoyage selon la revendication 2,
dans lequel les cavités sont disposées de telle manière que l'une des cavités et une autre correspondante parmi les cavités s'opposent l'une à l'autre par rapport à un centre de l'élément transmettant la lumière.

4. Dispositif de nettoyage selon la revendication 2 ou 3,
dans lequel les cavités sont disposées à équidistance les unes des autres autour de l'élément transmettant la lumière.

5. Dispositif de nettoyage selon la revendication 2 ou 3,
dans lequel les cavités sont disposées de manière à avoir des espacements différents entre les cavités adjacentes.

6. Dispositif de nettoyage selon l'une quelconque des revendications 2 à 5,
dans lequel les cavités ont des ouvertures qui ont des formes différentes.

7. Dispositif de nettoyage selon l'une quelconque des revendications 1 à 6,
dans lequel la section de support maintient le dispositif d'imagerie de telle manière qu'un axe optique du dispositif d'imagerie traverse une partie de surface de l'élément transmettant la lumière qui présente une quantité maximale de déplacement.

8. Dispositif de nettoyage selon l'une quelconque des revendications 1 à 7,
dans lequel la section de support maintient le dispositif d'imagerie de telle manière qu'un axe optique du dispositif d'imagerie traverse une partie de surface de l'élément transmettant la lumière qui ne présente pas une quantité maximale de déplacement.

9. Dispositif de nettoyage selon l'une quelconque des revendications 1 à 8,
dans lequel une quantité maximale de déplacement présentée sur la surface de l'élément transmettant la lumière est de 1 micromètre ou plus.

10. Unité d'imagerie comprenant:
un dispositif d'imagerie; et
le dispositif de nettoyage selon l'une quelconque des revendications 1 à 9.
